# EUROPEAN PATENT SPECIFICATION

(11) **EP 2 819 563 B1**
(45) Date of publication and mention of the grant of the patent: **12.09.2018**
(21) Application number: 13708224.4
(22) Date of filing: 19.02.2013
(51) Int. Cl.: A47J 43/07

(54) **FOOD PROCESSOR ARRANGEMENTS**
LEBENSMITTELVERARBEITUNGSANORDNUNGEN
AGENCEMENTS DE ROBOT CULINAIRE

(30) Priority: 27.02.2012 GB 201203321
(43) Date of publication of application: 07.01.2015
(73) Proprietor: Kenwood Limited, Havant Hampshire PO9 2NH (GB)
(72) Inventor: FIELDS, Robert, Havant Hampshire PO9 2NH (GB); PALMER, Paul, Havant Hampshire PO9 2NH (GB)
(74) Representative: Hector, Annabel Mary
(86) International application number: PCT/GB2013/050394
(87) International publication number: WO 2013/128164

(56) References cited:
- DE-A1- 19 756 923
- GB-A- 2 434 740
- US-A1- 2003 037 685

## Description

This invention relates to food processor arrangements and in particular to driving means associated with cutter plates for use in such arrangements.

Cutter plates used for chopping or otherwise comminuting foodstuffs in the bowl of an electrically powered food processor are typically located just beneath the lid of a bowl and close to a feed-tube entry through the lid; the cutter plate being rotated rapidly by means of an extension shaft that runs centrally through the bowl and picks up, through the bottom of the bowl, rotary drive from a motor located in a base of the processor. Usually the bowl sits directly on the base and the cutter comprises a fixed blade, which may be curved or straight and which is pressed out of, or fixedly secured to, a flat, metallic disk. The chopped food typically falls into the bowl through an aperture, formed between the disk and the blade.

Many blade configurations have been utilised in such arrangements, and most work quite well, but none has proven entirely satisfactory in operation. In particular, there is a tendency for such blades to squash, rather than slice through, certain types of food.

The present invention aims to address the above-described problem.

According to the invention there is provided food processor arrangement comprising a base housing an electrical drive motor and having coaxial drive outlets driven from the motor; the base supporting a lidded bowl having a central axis along which extends a drive shaft conveying the coaxial rotational drives from the outlets to a location proximate the underside of the lid of said bowl; wherein: the lid of the bowl is apertured to allow insertion therethrough of foodstuffs to be processed in said bowl; said shaft is adapted to support, for rotation by one of said drives, a cutter disk bearing a cutting blade for impacting said foodstuffs to effect processing thereof; and said shaft can also rotate, by means of the other of said drives, a cam means adapted to co-operate with cam-follower means to impart to said blade a reciprocating, slicing motion relative to said disk.

In some preferred embodiments of the invention, said cam means is supported on said disk and centrally thereof; said cam means being freely rotatable relative to said disk.

In other embodiments of the invention, it is preferred that said cam means is supported for rotation in said lid, in which case it is preferred that facing surfaces of said cam means and said cam-follower means are chamfered or otherwise configured to facilitate their assumption of their assigned operating relationship when the lid is assembled to the bowl.

Preferably, the cam means comprises a multi-lobed profile.

Further preferably, the cam-follower means comprises at least one protrusion provided on said blade or on an attachment thereto.

In some preferred embodiments of the invention, said cam means and said cam-follower means are configured to move said blade in both directions of its reciprocating movement.

Alternatively, in other embodiments, it is preferred that said cam means and said cam-follower means are configured to move said blade in one direction of its reciprocating movement, against a resilient force urging the blade in the other of said directions.

In various preferred embodiments of the invention, a cutting surface of said blade may formed with a smoothly ground edge, or may be serrated, toothed or otherwise formed to enhance cutting performance.

Preferably, an aperture is formed through said disk adjacent said blade to provide part at least of a gap through which foodstuffs sliced by said blade can fall into said bowl.

In some preferred embodiments of the invention, an underside of said disk bears a downwardly dependent distribution means adapted to redistribute foodstuffs accumulating in the bowl and approaching said underside of the disk.

Some preferred embodiments of the invention further comprise counterbalance means carried by said disk and configured to compensate dynamically for out of balance forces created by the reciprocating movements of said blade.

Still further preferred embodiments of the invention further comprise cartridge means supporting the cutting blade and housing the cam means and cam-follower means in a configuration such that the cartridge means, and therefore the cutting blade are driven to execute the reciprocating, slicing motion.

Further preferably, the said cartridge means is replaceably mountable to the cutter disk.

In order that the invention may be clearly understood and readily carried into effect, one embodiment thereof will now be described, by way of example only, with reference to the accompanying drawings, of which:
Figure 1 shows, in perspective and exploded diagrammatic form, certain elements of a food processor arrangement suitable for use with the present invention, to illustrate how such elements typically co-operate in practice;
Figures 2(a) and 2(b) show respectively the top and underside of a cutter disk adapted for use with the present invention;
Figure 3 shows an alternative view, from a different angle, of the top of the cutter disk shown in Figure 2(a);
Figure 4 shows a detailed perspective view of a blade assembly suitable for use with the invention;
Figure 5 shows in perspective view a cartridge means supporting a cutter blade for use in certain embodiments of the invention;
Figure 6 shows the cartridge means of Figure 5 with a casing part removed to illustrate internal components thereof; and
Figures 7(a), 7(b) and 7(c) show respective stages of the attachment/removal of the cartridge means to and from a cutter disk.

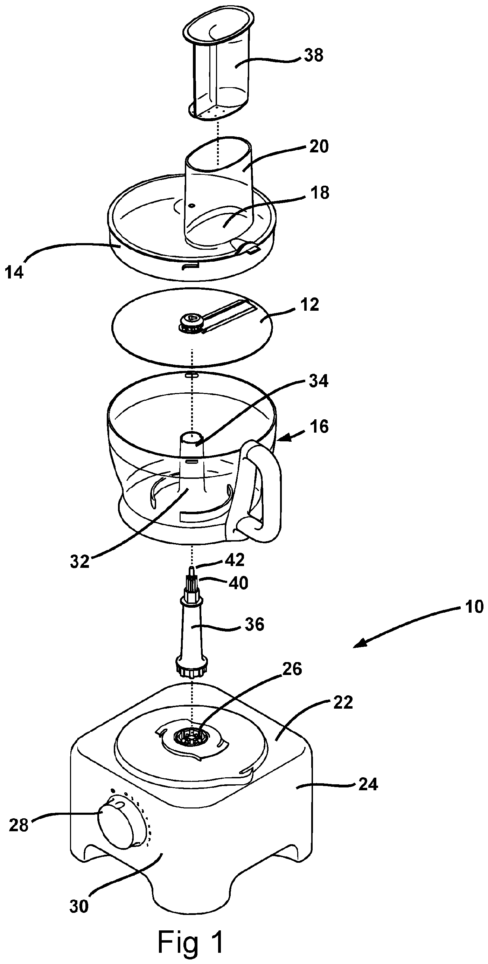

Referring now to Figure 1, a food processor arrangement 10 includes a cutter disk 12 which carries one or more blades and which, in use, is mounted for rotation closely beneath the lid 14 of a bowl 16. The lid 14 has an aperture 18 therein, and carries a feed-tube 20, through which foodstuffs to be processed can be introduced into the bowl 16. The feed-tube 20 is located over said aperture 18, so that foodstuffs can be introduced into the bowl through the tube 20.

The bowl 16 is supported for operation upon an upper surface 22 of a base 24 which contains an electric motor (not shown) and presents a dual coaxial drive outlet 26, coupled to the motor, on its bowl-supporting surface 22. The coaxial drives presented at the outlet 26 run at different speeds, and a typical speed ratio between the two is 3:1 though of course other ratios can be used if preferred.

The speed of the motor and its mode of operation (e.g. continuous or pulsed) is, in this example, controllable by means of a rotatable knob 28 on one of the upright surfaces 30 of the base 24 but it will be appreciated that any convenient form of control can be used. In particular, press-button or touch controls may be used and any directly actuated control provided may, if desired, be supplemented with a remote control facility. The bottom of the bowl 16 is centrally apertured, as shown at 32, allowing access to the drive outlet 26 on the base 24, and is further, in known manner, integrally formed with a re-entrant tubular element 34 centered on the aperture 32. A drive shaft 36 which, in use, engages the drive outlet 26, extends through the tubular element 34 and thus centrally of the bowl 16 to a location, close to the underside of the lid 14, where it supports and drives the cutter plate 12, which is designed and configured to process foodstuff urged against it by means of a pusher 38 inserted into the feed-tube 20.

The blades on current cutter disks such as 12 take varying configurations, including concave, straight and convex with reference to the direction of rotation. The blades may also be set at a tangent to the outer edge of the cutting disk or angled in either direction. In any event, the intention is to have the blade act upon the foodstuffs so as to impart a slicing action, the nature and efficiency of which is governed, among other things, by the angle at which the blade attacks the foodstuff and the diameter at which the foodstuff encounters the blade. The disk 12 is typically apertured, near the blade, so that sliced foodstuffs can fall through the aperture and into the bowl 16.

Typical existing blade arrangements however tend, particularly with some soft foods, such as tomatoes, to initially squash the food, rather than cutting cleanly through it, so effecting what is called a "push cut".

The present invention facilitates the addition of an additional slicing motion to the blade as it travels through the foodstuff, whereby the cut becomes a true "slice cut", thereby achieving a cleaner cut requiring less effort from the blade (i.e. demanding less rotational torque, in the case of a disk cutter). This also has benefits when cutting food with a tough skin as the slicing action assists in the blade to break through the skin with a clean cut.

The example of the invention now to be described in detail provides a simple technique for imparting an oscillating slicing action to a blade mounted on a rotating disk cutter. It will be appreciated, however, that the slicing action can be implemented in various alternative ways if preferred.

In this example, advantage is taken of the fact that the drive shaft 36 is typically configured to carry two concentric drives from the outlet 26, only one of which (the outer of the two; indicated at 40 in Figure 1) is usually employed when using a disk cutter. The inner drive 42, which extends above the remainder of the shaft 36, normally simply runs idly in a bearing carried centrally on the underside of the lid 14 of the bowl 16 when the processor is configured for use with a cutter disk.

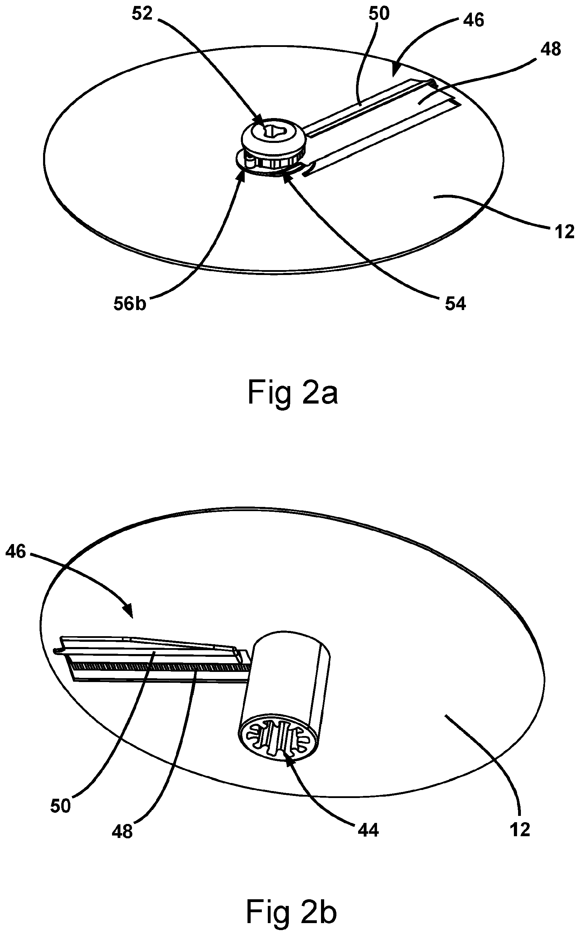

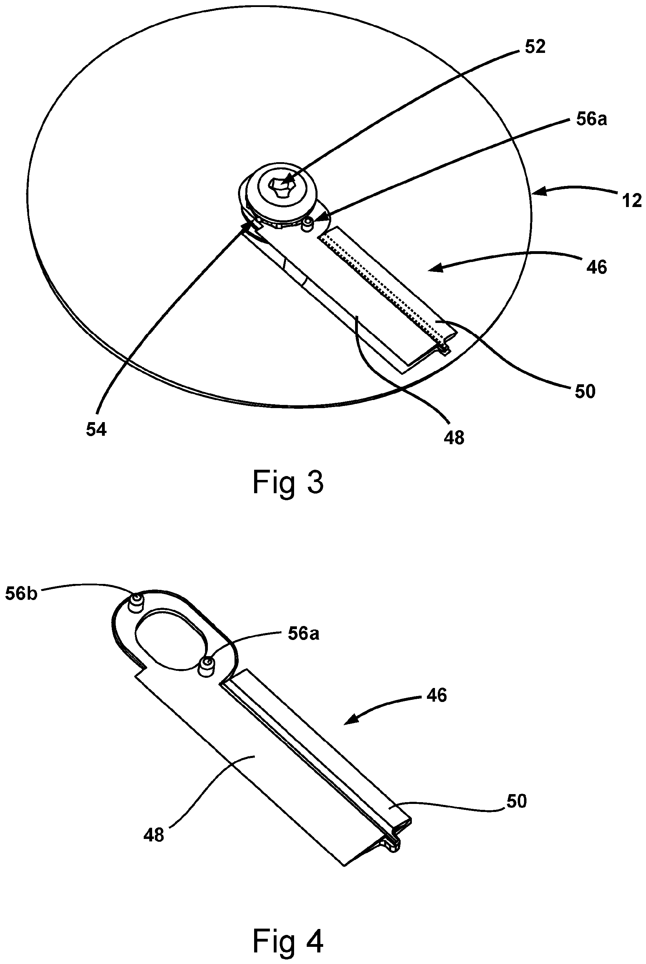

Referring now additionally to Figures 2(a), 2(b), 3 and 4, this embodiment of the present invention utilises a disk 12 formed with a fixed central boss 44 which is configured to engage the lower (outer) drive 40 on shaft 36, thereby enabling the disk 12 to be both supported and rotated by the shaft 36.

The disk 12 supports a blade assembly 46 which comprises a blade 48 and a carrier 50, to which the blade is mounted. When the blade assembly 46 is fitted to the supporting disk 12, the blade assembly is supported in two linear directions but is free to move in the third direction. In this example, the blade 48 is constrained against vertical movement and also cannot move with or against the direction of rotation in the horizontal plane, but it is capable - in this plane - of limited reciprocal linear movement in a direction extending generally radially of the disk 12. The chosen direction of motion is dictated, at least in part, by the shape of a guide of the blade carrier 50.

The carrier 50 is preferably made of a food-grade plastics material and may be formed and/or treated to provide low-friction running surfaces for the blade 48, thereby facilitating the reciprocating movements of the blade. Bearing in mind its intended usage and location, moreover, the carrier 50 is preferably fabricated to resist the ingress of foodstuffs and in any event is designed without food traps, so as to be easy to clean.

A cam-supporting member 52 mounted centrally of the disk 12, and thus coaxially with the boss 44, engages with the upper (inner) drive 42 of shaft 36 by means of a keyed feature. In this respect, it will be appreciated that, unlike the boss 44 (which is fixed to the disk 12), the cam-supporting member 52 is mounted for rotation relative to the disk 12. The cam-supporting member supports a cam profile 54 having plural lobes configured to interact with cam followers 56 carried by the blade assembly 46.

Instead of being carried by the disk 12, the cam-supporting member 52 can be carried by the lid 14 of the food processor 10; the member 12 in that case being rotatably mounted in a suitable bearing formed in, or attached to, the lid 14. Since, in such an embodiment, the cam profile 54 and the cam-followers 56 are carried on separable components of the arrangement, it is preferred to form chamfers or other guiding features on their facing surfaces to ensure that they readily adopt their correct positional relationship when the lid 14 is closed down onto the bowl 16 of the processor 10.

In operation, the disk 12 and its blade assembly 46 are rotated by the lower (outer) output drive 40 of the shaft 36. At the same time, however, the cam 52 is rotated by the upper (inner) output drive 42 on the output shaft 36. The speed differential between the two rotating parts causes the cam profile 54 to act on the cam-followers 56 of the blade assembly 46, and hence the blade 48 is forced to move reciprocally in a direction along the edge of the blade guide cut out.

In this embodiment of the invention, the reciprocating motion of the blade 48 is effected in both directions by the co-operation between the lobes of the cam profile 54 and the cam-followers 56 on the disk 12; the arrangement being that, at the same time that a lobe of the profile 54 engages a first cam-follower 56a, and thus pushes the blade 48 outwards, a depression of the profile 54 is in contact with a second cam-follower 56b and, conversely, at the same time that a lobe of the profile 54 engages the second cam-follower 56b, so pushing the blade 48 inwards, a depression of the profile 54 is in contact with a first cam-follower 56a. In such an embodiment, with two cam followers 56a and 56b diametrically opposed as shown with respect to the cam 52, this relationship implies the use of a cam profile with an odd number of lobes.

Those skilled in the art will readily perceive that various alternative arrangements are possible regarding the nature, configuration and operations of the cam profile and the cam-followers. Indeed, in some embodiments, a single cam-follower may be used to move the blade outwards, provided that a resilient restoring force is permanently applied to the blade 48 to provide its repeated inward movements (or vice versa). One means of applying such a restoring force in a simple and cost-effective manner utilises a cushion of resilient food-grade plastics material supported in the blade holder 46 so as to act on the radially outer edge of the blade 46.

In general, however, the cam profile can be altered by varying the number and shape of lobes, in order to change the extent (amplitude) and frequency of the reciprocal motion of the blade 46, thereby to produce a desired slicing action. Likewise, the cam-followers 56 can be altered in number, shape and/or position to produce a desired motion and frequency of the blade 46. Certain parameters of the movement of blade 48 can also be varied, according to choice and/or application, by having a different ratio between the speeds of the two drives 40 and 42 on the shaft 36. In this respect, some embodiments of the invention can be provided with user-operable means to vary the aforementioned speed ratio by altering the relation between the coaxial drive outlets 26 using controls (not shown) provided on the base 24.

The reciprocating cutting path of the blade 46 is not limited to a linear motion but could also have a curved profile, either concave or convex with respect to the rotational direction of the cutter disk 12; such motion need not be perpendicular to the outer diameter of the cutter disk 12, and could alternatively be angled either forward or backward with respect to the rotational direction of the disk 12.

The blade 46 need not have a straight edge as shown in the drawings hereof. It could have a concave or convex shape with respect to the rotational direction of the disk 12. Again, the cutting edge need not be disposed perpendicularly to the outer diameter of the cutter disk 12, and could alternatively be angled either forward or backward with respect to the rotational direction of the disk 12.

In any embodiment of the invention, the cutting edge of the blade 46 need not be a plain ground edge but could alternatively be serrated, dentated, or otherwise regularly or irregularly toothed.

In some embodiments of the invention, it is preferred to incorporate upon the disk 12 a counterbalance to compensate dynamically for out of balance forces created by the reciprocating movements of the blade 46. Such a counterbalance can conveniently comprise a weight affixed to the blade 48, or an additional part that interfaces with the cam profile 54, or with a second additional cam. In any event, the motion of this additional part or weight is constrained to move relative to the blade 48 in such a way as to compensate for the blade's motion, thereby cancelling, or at least reducing, out of balance forces created by the reciprocating motion of the blade.

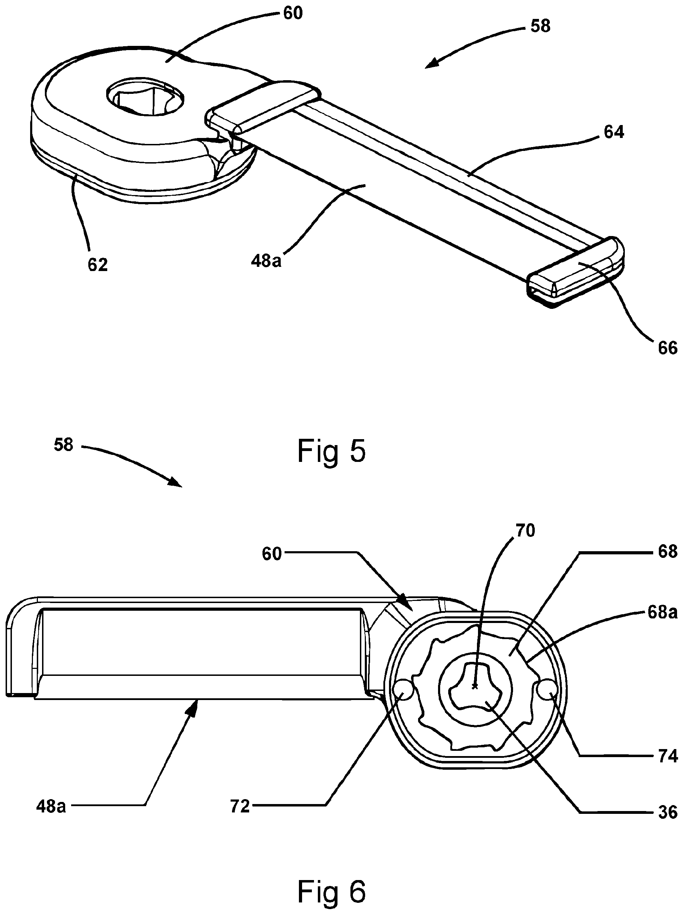

A particularly convenient construction, allowing ready replacement of blades and thus permitting, for example, the use of blades with differing cutting heights, utilises the configuration shown in Figures 5 to 7. In this configuration, a blade 48a is mounted into a cartridge 58 which carries the necessary means to pick up the drive from the food processor's drive shaft 36 (not shown in this Figure) and cause the cartridge as a whole to perform the generally radially-directed, oscillating cutting motion required. The blade 48a is fixedly secured to the cartridge 58 and thus performs the oscillatory cutting motion, along with the cartridge, as will now be described.

Referring now to Figure 5, there is shown a perspective view of a cartridge 58 which is configured to snap-fit or otherwise be firmly but releasably secured into a suitably shaped receptor cut-out (not shown) formed in a cutter disk such as 12. The cartridge 58 comprises, in this example, a main housing 60 and a base closure 62, forming together the central boss of the cutter disk, with the blade 48a fixedly secured to the main housing 60. The blade 48a also carries slotted edge and end mouldings 64 and 66 respectively, by means of which the blade can be mounted securely into the cut-out formed in the disk, whilst still retaining the capability of performing reciprocating motion relative to the disk, typically in an approximately radial direction, as described previously. As shown in Figure 6, the main housing 60 and the base closure 62 contain the elements to permit the cartridge 58 to be reciprocally driven relative to the disk, so as to impart the desired slicing motion to the blade 48a by way of its direct attachment to the main housing 60. In this example, the driving elements comprise a multi-lobed cam 68 which is driven relative to the cutter disk (as in the embodiments described hereinbefore) by the coaxial food processor drive shaft 36 about a central axis 70, which is also the axis of the cutter disk such as 12.

In the same way as previously described, the cam 68 has a profile 68a which co-operates with a pair of cam-followers 72 and 74 which are fixedly mounted within the central housing part of the cartridge. By this means, the reciprocating motion of the blade 48a is effected as desired; the arrangement being that, at the same time that a lobe of the profile 68a engages the cam-follower 72, thus pushing the blade 48a radially outwards, a depression of the profile 68a is in contact with the second cam-follower 74 and, conversely, at the same time that a lobe of the profile 68a engages the second cam-follower 74, so pushing the blade 48a radially inwards, a depression of the profile 68a is in contact with the first cam-follower 72. In its simplest embodiment, with two cam followers 72 and 74 diametrically opposed as shown with respect to the cam 68, this relationship implies the use of a cam profile with an odd number of lobes. In this case, as shown, nine lobes are used, but it will readily be appreciated that more or less than nine lobes can be used, and also that entirely different configurations of cams, profiles and cam followers can be used if desired.

If desired, the cam profile 68a and/or the surfaces of the cam-followers 72 and 74 in contact with the profile can be formed of or coated with materials to reduce friction and/or enhance wear resistance. Furthermore, selected regions of the slotted edge and end mouldings and/or the edges of the disk which engage into the slots therein can be similarly treated to reduce friction and/or enhance wear resistance.

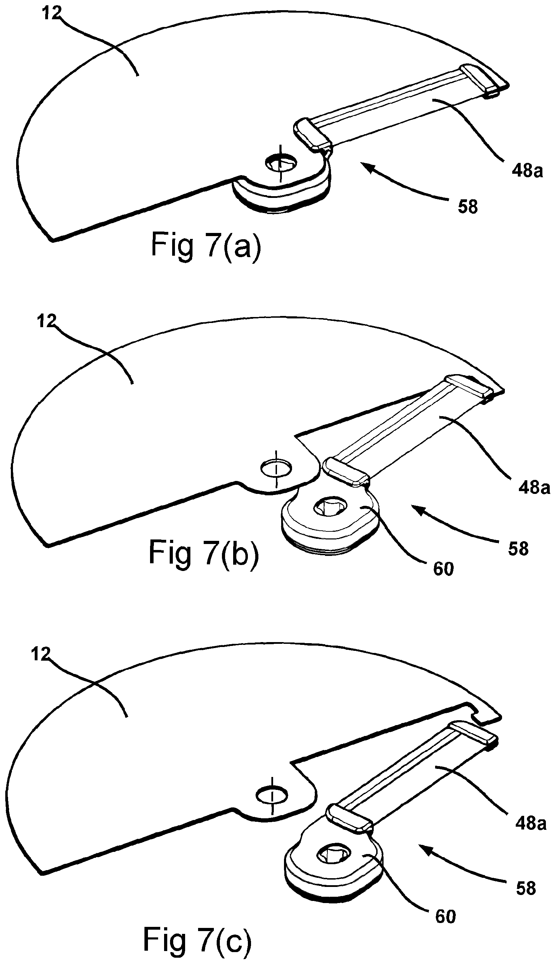

A particularly convenient implementation of the cartridge-based system just described utilises a cutter disk formed of a pair of half-disks, since the cartridge can then be readily fitted to and removed from one half of the cutter disk by way of an open slot, as indicated in Figures 7(a), 7(b) and 7(c).

In some embodiments of the invention, it is preferred to provide protrusions or other formations or attachments to the underside of the cutter disk 12, as described and claimed in our co-pending patent applications GB 1118186.4 and PCT/GB2012/052485. For example, the protrusions may be formed as one or more tabs stamped, punched or otherwise bent out of the cutter disc plate itself. In other embodiments, the protrusions may be formed separately from the plate and may comprise metal parts intended to be fixed to the cutter disc plate, by welding for example, or moulded plastics components intended to be pressed into retaining apertures preformed in the plate.

This expedient has been found to effectively redistribute, within the bowl, cut foodstuffs that may have accumulated in a particular area of the bowl. In this respect, with some configurations of cutter disk, the foodstuffs in the bowl tend to pile up in the area beneath the aperture in the disk associated with the blade whilst leaving other areas of the bowl under-used. By adding protrusions to the underside of the cutter disc plate, the processed foodstuffs are swept from the top of the pile and redistributed throughout the rest of the bowl. Redistribution, by the means described, effectively increases the usable capacity of the bowl.

## Claims

1. A food processor arrangement (10) comprising a base (24) housing an electrical drive motor and having coaxial drive outlets (26) driven from the motor; the base (24) supporting a lidded bowl (16) having a central axis along which extends a drive shaft (36) conveying the coaxial rotational drives (40, 42) from the outlets (26) to a location proximate the underside of the lid (14) of said bowl (16); wherein: the lid (14) of the bowl (16) is apertured (18) to allow insertion therethrough of foodstuffs to be processed in said bowl (16); said shaft (36) is adapted to support, for rotation by one of said drives, a cutter disk (12) bearing a cutting blade (48; 48a) for impacting said foodstuffs to effect processing thereof; **characterized in that** said shaft (36) can also rotate, by means of the other of said drives, a cam means (54; 68, 68a) adapted to co-operate with cam-follower means (56a, 56b; 72, 74) to impart to said blade (48; 48a) a reciprocating, slicing motion relative to said disk (12).

2. An arrangement according to claim 1 wherein said cam means (54; 68, 68a) is supported centrally of said disk (12); said cam means (54; 68, 68a) being freely rotatable relative to said disk (12).

3. An arrangement according to claim 1, wherein said cam means (54; 68, 68a) is supported for rotation in said lid (14).

4. An arrangement according to claim 3, wherein facing surfaces of said cam means (54; 68, 68a) and said cam-follower means (56a, 56b; 72, 74) comprise guiding features to facilitate their assumption of their assigned operating relationship when the lid (14) is assembled to the bowl (16).

5. An arrangement according to any preceding claim, wherein said cam means (54; 68, 68a) comprises a multi-lobed profile.

6. An arrangement according to claim 5, wherein said cam-follower means (56a, 56b; 72, 74) comprises at least one protrusion provided on said blade (48; 48a) or on an attachment thereto.

7. An arrangement according to any preceding claim, wherein said cam means (54; 68, 68a) and said cam-follower means (56a, 56b; 72, 74) are configured to move said blade (48; 48a) in both directions of its reciprocating movement.

8. An arrangement according to any of claims 1 to 6 wherein said cam means (54; 68, 68a) and said cam-follower means (56a, 56b; 72, 74) are configured to move said blade (48; 48a) in one direction of its reciprocating movement, against a resilient force urging the blade (48; 48a) in the other of said directions.

9. An arrangement according to any preceding claim, wherein a cutting surface of said blade (48; 48a) is formed with a smoothly ground edge.

10. An arrangement according to any of claims 1 to 8, wherein a cutting surface of said blade (48; 48a) is serrated or toothed to enhance cutting performance.

11. An arrangement according to any preceding claim, wherein an aperture is formed through said disk (12) adjacent said blade (48; 48a); the aperture providing part at least of a gap through which foodstuffs sliced by said blade (48; 48a) can fall into said bowl (16).

12. An arrangement according to any preceding claim, where.in an underside of said disk (12) bears a downwardly dependent distribution means adapted to redistribute foodstuffs accumulating in the bowl and approaching said underside of the disk (12).

13. An arrangement according to any preceding claim, further comprising counterbalance means carried by said disk (12) and configured to compensate dynamically for out of balance forces created by the reciprocating movements of said blade (48).

14. An arrangement according to any preceding claim further comprising cartridge means (58) supporting said cutting blade (48a) and housing said cam means (68, 68a) and said cam-follower means (72, 74) in a configuration such that said cartridge means (58), and therefore said cutting blade (48a) are driven to execute said reciprocating, slicing motion.

15. An arrangement according to claim 14, wherein said cartridge means (58) is replaceably mountable to said cutter disk (12).

## Patentansprüche

1. Lebensmittelverarbeitungsanordnung (10), umfassend einen Sockel (24), in dem ein elektrischer Antriebsmotor aufgenommen ist und der vom Motor aus angetriebene koaxiale Antriebsanschlüsse (26) hat; wobei der Sockel (24) eine mit Deckel versehene Schüssel (16) trägt, die eine Mittelachse hat, an der entlang sich eine Antriebswelle (36) erstreckt, die die koaxialen Drehantriebe (40, 42) von den Anschlüssen (26) zu einer Stelle nahe der Unterseite des Deckels (14) der genannten Schüssel (16) überträgt; wobei: der Deckel (14) der Schüssel (16) mit einer Öffnung (18) versehen ist, um das Eingeben von in der genannten Schüssel (16) zu verarbeitenden Lebensmitteln durch sie hindurch zuzulassen; wobei die genannte Welle (36) zum Tragen einer Schneidscheibe (12), die eine Schneidklinge (48; 48a) zum Anschlagen an den genannten Lebensmitteln aufweist, um ihre Verarbeitung zu bewirken, zur Drehung durch einen der genannten Antriebe ausgeführt ist; **dadurch gekennzeichnet, dass** die genannte Welle (36) mittels des anderen der genannten Antriebe auch ein Kurvenmittel (54; 68, 68a) drehen kann, das zum Zusammenwirken mit einem Kurvenbolzenmittel (56a, 56b; 72, 74) ausgeführt ist, um der genannten Klinge (48; 48a) eine hin- und hergehende Schneidbewegung relativ zu der genannten Scheibe (12) zu verleihen.

2. Anordnung nach Anspruch 1, wobei das genannte Kurvenmittel (54; 68, 68a) mittig der genannten Scheibe (12) gelagert ist; wobei das genannte Kurvenmittel (54; 68, 68a) relativ zur genannten Scheibe (12) frei drehbar ist.

3. Anordnung nach Anspruch 1, wobei das genannte Kurvenmittel (54; 68, 68a) drehbeweglich in dem genannten Deckel (14) gelagert ist.

4. Anordnung nach Anspruch 3, wobei die Stirnflächen des genannten Kurvenmittels (54; 68, 68a) und des genannten Kurvenbolzenmittels (56a, 56b; 72, 74) Führungsmerkmale aufweisen, um zu ermöglichen, dass sie ihre zugeteilte Betriebsbeziehung einnehmen, wenn der Deckel (14) auf die Schüssel (16) aufgesetzt wird.

5. Anordnung nach einem der vorhergehenden Ansprüche, wobei das genannte Kurvenmittel (54; 68, 68a) ein mehrlappiges Profil aufweist.

6. Anordnung nach Anspruch 5, wobei das genannte Kurvenbolzenmittel (56a, 56b; 72, 74) wenigstens einen Vorsprung aufweist, der an der genannten Klinge (48; 48a) oder einem Zusatzteil daran bereitgestellt ist.

7. Anordnung nach einem der vorhergehenden Ansprüche, wobei das genannte Kurvenmittel (54; 68, 68a) und das genannte Kurvenbolzenmittel (56a, 56b; 72, 74) angeordnet sind, um die genannte Klinge (48; 48a) in beide Richtungen ihrer hin- und hergehenden Bewegung zu bewegen.

8. Anordnung nach einem der Ansprüche 1 bis 6, wobei das genannte Kurvenmittel (54; 68, 68a) und das genannte Kurvenbolzenmittel (56a, 56b; 72, 74) angeordnet sind, um die genannte Klinge (48; 48a) in eine Richtung ihrer hin- und hergehenden Bewegung, gegen eine Federkraft, die die Klinge (48; 48a) in die andere der genannten Richtungen drängt, zu bewegen.

9. Anordnung nach einem der vorhergehenden Ansprüche, wobei eine Schneide der genannten Klinge (48; 48a) mit einer glatt geschliffenen Kante ausgebildet ist.

10. Anordnung nach einem der Ansprüche 1 bis 8, wobei eine Schneide der genannten Klinge (48; 48a) gezackt oder verzahnt ist, um die Schneidleistung zu verbessern.

11. Anordnung nach einem der vorhergehenden Ansprüche, wobei durch die genannte Scheibe (12) neben der genannten Klinge (48; 48a) eine Öffnung ausgebildet ist; wobei die Öffnung Teil von wenigstens einer Lücke bereitstellt, durch welche von der genannten Klinge (48; 48a) geschnittene Lebensmittel in die genannte Schüssel (16) fallen können.

12. Anordnung nach einem der vorhergehenden Ansprüche, wobei die Unterseite der genannten Scheibe (12) ein nach unten abhängendes Verteilungsmittel trägt, das zum Umverteilen der sich in der Schüssel ansammelnden und sich der Unterseite der Scheibe (12) nähernden Lebensmittel ausgeführt ist.

13. Anordnung nach einem der vorhergehenden Ansprüche, die ferner ein Gegengewichtsmittel aufweist, das von der genannten Scheibe (12) getragen wird und zum dynamischen Ausgleichen von Unwuchtkräften gestaltet ist, die durch die hin- und hergehenden Bewegungen der genannten Klinge (48) hervorgerufen werden.

14. Anordnung nach einem der vorhergehenden Ansprüche, die ferner ein Kartuschenmittel (58) aufweist, das die genannte Schneidklinge (48a) trägt und das genannte Kurvenmittel (68, 68a) und das genannte Kurvenbolzenmittel (72, 74) aufnimmt in einer solchen Gestaltung, dass das genannte Kartuschenmittel (58) und daher die genannte Schneidklinge (48a) zum Ausführen der genannten hin- und hergehenden Schneidbewegung angetrieben werden.

15. Anordnung nach Anspruch 14, wobei das genannte Kartuschenmittel (58) austauschbar an der genannten Schneidscheibe (12) montierbar ist.

## Revendications

1. Agencement de robot ménager (10) comprenant un socle (24) contenant un moteur d'entraînement électrique et ayant des sorties d'entraînement coaxiales (26) entraînées à partir du moteur ; le socle (24) supportant un bol à couvercle (16) ayant un axe central le long duquel un arbre d'entraînement (36) transmettant les entraînements en rotation coaxiaux (40, 42) des sorties (26) à un emplacement proche du dessous du couvercle (14) dudit bol (16) ; dans lequel : le couvercle (14) du bol (16) est percé (18) pour permettre l'insertion par là d'aliments à transformer dans ledit bol (16) ; ledit arbre (36) est conçu pour supporter, pour la rotation par l'un desdits entraînements, un disque de coupe (12) portant une lame coupante (48 ; 48a) pour impacter lesdits aliments pour effectuer le traitement de ceux-ci ; **caractérisé en ce que** ledit arbre (36) peut aussi faire tourner, au moyen de l'autre desdits entraînements, un moyen formant came (54 ; 68, 68a) conçu pour coopérer avec un moyen formant galet de came (56a, 56b ; 72, 74) pour transmettre à ladite lame (48 ; 48a) un mouvement de tranchage, alternatif par rapport audit disque (12).

2. Agencement selon la revendication 1 dans lequel ledit moyen formant came (54 ; 68, 68a) est supporté au centre dudit disque (12) ; ledit moyen formant came (54 ; 68, 68a) pouvant tourner librement par rapport audit disque (12).

3. Agencement selon la revendication 1, dans lequel ledit moyen formant came (54 ; 68, 68a) est supporté pour une rotation dans ledit couvercle (14).

4. Agencement selon la revendication 3, dans lequel les surfaces se faisant face dudit moyen formant came (54 ; 68, 68a) et dudit moyen formant galet de came (56a, 56b ; 72, 74) comprennent des éléments de guidage pour faciliter leur adoption de leur relation de fonctionnement assignée quand le couvercle (14) est assemblé avec le bol (16).

5. Agencement selon l'une quelconque des revendications précédentes, dans lequel ledit moyen formant came (54 ; 68, 68a) comprend un profil polylobé.

6. Agencement selon la revendication 5, dans lequel ledit moyen formant galet de came (56a, 56b ; 72, 74) comprend au moins une saillie fournie sur ladite lame (48 ; 48a) ou sur une attache de celle-ci.

7. Agencement selon l'une quelconque des revendications précédentes, dans lequel ledit moyen formant came (54 ; 68, 68a) et ledit moyen formant galet de came (56a, 56b ; 72, 74) sont configurés pour déplacer ladite lame (48 ; 48a) dans les deux direction de son mouvement alternatif.

8. Agencement selon l'une quelconque des revendications 1 à 6 dans lequel ledit moyen formant came (54 ; 68, 68a) et ledit moyen formant galet de came (56a, 56b ; 72, 74) sont configurés pour déplacer ladite lame (48 ; 48a) dans une direction de son mouvement alternatif, contre une force élastique poussant la lame (48 ; 48a) dans l'autre desdites directions.

9. Agencement selon l'une quelconque des revendications précédentes, dans lequel une surface coupante de ladite lame (48 ; 48a) est formée avec un tranchant meulé de manière lisse.

10. Agencement selon l'une quelconque des revendications 1 à 8, dans lequel une surface coupante de ladite lame (48 ; 48a) est crantée ou dentelée pour améliorer la performance de coupe.

11. Agencement selon l'une quelconque des revendications précédentes, dans lequel une ouverture est formée à travers ledit disque (12) adjacente à ladite lame (48 ; 48a) ; l'ouverture fournissant une partie au moins d'un espace à travers lequel les aliments tranchés par ladite lame (48 ; 48a) peuvent tomber dans ledit bol (16).

12. Agencement selon l'une quelconque des revendications précédentes, dans lequel un dessous dudit disque (12) soutient un moyen de distribution dépendant vers le bas conçu pour redistribuer les aliments accumulés dans le bol et s'approchant dudit dessous du disque (12).

13. Agencement selon l'une quelconque des revendications précédentes, comprenant en outre un moyen formant contrepoids porté par ledit disque (12) et configuré pour compenser de manière dynamique les forces déséquilibrées créées par les mouvements alternatifs de ladite lame (48).

14. Agencement selon l'une quelconque des revendications précédentes comprenant en outre un moyen formant cartouche (58) supportant ladite lame coupante (48a) et contenant ledit moyen formant galet de came (68, 68a) et ledit moyen formant galet de came (72, 74) dans une configuration telle que le moyen formant cartouche (58), et donc ladite lame coupante (48a) sont entraînés pour exécuter ledit mouvement de tranchage, alternatif.

15. Agencement selon la revendication 14, dans lequel ledit moyen formant cartouche (58) peut être monté de manière remplaçable sur ledit disque de coupe (12).
